Europäisches Patentamt

European Patent Office

Office européen des brevets

(11) Publication number: **0 302 510**
**A2**

# EUROPEAN PATENT APPLICATION

(21) Application number: 88112784.9

(22) Date of filing: 05.08.88

(51) Int. Cl.⁴: **C08L 77/00 , C08L 25/04**

(30) Priority: 06.08.87 US 82338

(43) Date of publication of application:
08.02.89 Bulletin 89/06

(84) Designated Contracting States:
**DE FR GB IT NL**

(71) Applicant: **BORG-WARNER CHEMICALS INC.**
**International Center**
**Parkersburg West Virginia 26102(US)**

(72) Inventor: **Howe, David Viggers**
**285 N. Main Street**
**Glen Ellyn Illinois 60137(US)**
Inventor: **Myers, Charles Louis**
**654 North Eagle Lane**
**Palatine Illinois 60067(US)**
Inventor: **Jalbert, Ronald Louis**
**61 Canterbury Drive**
**Parkersburg West Virginia 26101(US)**

(74) Representative: **Vossius & Partner**
**Siebertstrasse 4 P.O. Box 86 07 67**
**D-8000 München 86(DE)**

(54) **Styrenic-polyamide-elastomer blends.**

(57) A polymer blend composition comprises from about 20 to 60 weight percent polyamide, from about 30 to 80 weight percent of styrenic component, and from about 1 to 25 weight percent of a carboxylated polyolefin elastomer. In preferred embodiments, the styrenic component includes carboxylic acid-derived functional groups and the carboxylated polyolefin elastomer comprises a copolymer of ethylene and another olefin compound.

EP 0 302 510 A2

## STYRENIC-POLYAMIDE-ELASTOMER BLENDS

### FIELD OF THE INVENTION

The present invention relates to polymer blend compositions including polyamide, a styrenic component and an elastomer. These compositions exhibit good compatibility and improved mechanical toughness, particularly at low temperatures.

### BACKGROUND OF THE INVENTION

Various polymers have been blended together in order to provide compositions having improved processibility, chemical resistance, mechanical properties and the like. For example, polyamide resins, which are advantageous in their chemical resistance and high temperature stability, have been blended with other polymers or resins in order to improve their moisture resistance, impact strength, flexibility or processing characteristics. The Grabowski U.S. patent No. 3,267,175 discloses blends of polyamide with acrylonitrile-butadiene-styrene terpolymers which exhibit improved moldability and impact strength. The Nielinger et al U.S. patent No. 4,381,371 discloses blends of amorphous polyamides and polybutadiene grafted with styrene and acrylonitrile, which blends have improved toughness and heat stability. However, as disclosed in the Grant et al U.S. patent No. 4,496,690 and the Sims U.S. patent No. 3,966,839, blends of polyamides and vinyl aromatic resins such as styrene resins generally exhibit poor compatibility between the polyamides and the styrene resins. The poor compatibility between the resins results in a nonhomogeneous composition and prevents the composition from obtaining the full benefit from the properties of each individual polymer component.

Various methods have been practiced for improving the compatibility of such polymer blends and for improving the overall properties of the blends. For example, the Dean U.S. patents Nos. 4,528,326 and 4,593,066, the Brinkmann et al U.S. patent No. 3,974,234, the Trabert et al U.S. patent No. 4,581,408, the Baer U.S. patent No. 4,584,344 and the Owens et al U.S. patent No. 3,668,274 all disclose methods for improving the compatibility of polyamide and vinyl aromatic resins such as styrene containing resins and for improving the impact properties, mechanical strength, chemical resistance or processibility of the resultant blend compositions. The Japanese references Nos. 46-38023, 57-92042 and 60-137961 also disclose blend compositions including polyamide resins having improved compatibility and/or physical or chemical properties. These patents generally disclose methods for modifying the vinyl aromatic resins to improve the compatibility and/or physical properties of the polymers or methods for improving the compatibility and/or physical properties by including additional components.

Additionally, polyamides have been blended with olefin polymers or copolymers including, for example polyethylene and/or polypropylene, in order to improve their impact strength, as described in the Roura U.S. patent No. 4,346,194, the Nangrani U.S. patent No. 4,537,929, the Olivier U.S. patent No. 4,594,386, and the British patents Nos. 1,157,569 and 1,403,797.

Thus, when forming polymer blend compositions, it is important to obtain good compatibility between the individual polymer components and to achieve the desired improvements in the physical properties of the blend without sacrificing the advantageous properties of the individual components.

### SUMMARY OF THE INVENTION

Accordingly, it is an object of the present invention to provide polymer blend compositions which exhibit good compatibility between the individual polymer components and which have good chemical and mechanical properties, such as improved impact strength, good chemical resistance, low load, high temperature dimensional stability, improved resistance to water absorption, and reduced mold shrinkage.

The novel polymer blend compositions according to the present invention comprise at least one polyamide, a styrenic component and a carboxylated polyolefin elastomer. The styrenic component preferably includes a styrenic polymer modified with a compatibilizing agent which provides the styrenic polymer with carboxylic acid-derived functional groups, for example, functional groups such as carboxylate, anhydride, carbonamide or the like functional groups or their amine derived functional groups. The styrenic polymer may be rubber modified, non-rubber modified or a mixture thereof. Generally, the styrenic component included in the compositions of the invention will contain one or more styrenic polymers which are not rubber modified. The ratio of rubber modified styrenic polymer to non-rubber modified styrenic polymer contained in the styrenic component may generally range from 100:1 to 0:100, although a preferred system contains at least a low level of a rubber modified styrenic polymer, for example, at least 10 parts per 100 parts total of the styrenic polymers included in the blend compositions. The styrenic component may include a broad range of rubber modified and non-rubber modified styrenic polymers, examples of which include styrene acrylonitrile copolymer (SAN), maleated SAN and acrylate modified ABS. Rubber modified styrenic polymers provide impact strength while all the styrenics provide improved resistance to water absorption, reduced mold shrinkage and, in general, increased rigidity at moderate temperatures (i.e., 50 to 100 ° C).

The polyamides are included in the polymer blend composition in an amount sufficient to impart good chemical resistance and low load, high temperature dimensional stability to the composition.

The carboxylated polyolefin elastomer is included in the polymer blend composition in an amount sufficient to improve the impact strength and other mechanical properties of the composition. Preferably, the polymer blend compositions of the invention comprise from about 20 to about 60 weight percent polyamide, from about 30 to about 80 weight percent of styrenic component, and from about 1 to about 25 weight percent of the carboxylated polyolefin elastomer, with the amounts of polyamide, styrenic component, and carboxylated polyolefin elastomer, and any other components adding up to 100 weight percent. The polymer blend compositions exhibit good compatibility between the individual polymer components and improved impact strength and ductility, particularly at low temperatures.

These and additional objects and advantages of the novel polymer blend compositions according to the present invention will be more fully understood in view of the following detailed description.

## DETAILED DESCRIPTION

As set forth above, the polymer blend compositions according to the present invention comprise at least one polyamide, at least one styrenic component and a carboxylated polyolefin elastomer.

Polyamide resins which are particularly adapted for inclusion in the thermoplastic blend compositions of the present invention comprise polymeric condensation products which contain reoccurring aromatic, cycloaliphatic and/or aliphatic amide groups as integral parts of the main polymeric chain. In general, the polyamide resins have linkages in the main chain of the following formula:

$$-\underset{\underset{O}{\parallel}}{C}-\underset{\underset{H}{\mid}}{N}-$$

Procedures for preparing polyamides are well-known in the art, and details of suitable processes are set forth in "Polyamides", Encyclopedia of Polymer Science and Technology, John Wiley and Sons, Inc., Volume 10, pages 487 to 491 (1969).

Preferred polyamides for use in the thermoplastic blend compositions of the present invention may be amorphous, semi-crystalline or a mixture thereof, and include, but are not limited to, polyhexamethylene adipamide (nylon 6:6); polypyrrolidone (nylon 4); polycaprolactam (nylon 6); polyheptolactam (nylon 7); polyoctanolactam (nylon 8); polynonanolactam (nylon 9); polyundecanolactam (nylon 11); polydodecanolactam (nylon 12); polyhexamethylene azelaiamide (nylon 6:9); polyhexamethylene sebacamide (nylon 6:10); polyhexamethylene isophthalamide (nylon 6:ip); polymetaxylylene adipamide (nylon MSD:6); polyamide of hexamethylenediamine and n-dodecanedioic acid (nylon 6:12); polyamide of dodecamethylenediamine and n-dodecanedioic acid (nylon 12:12); polyamide of tetramethylene diamine and adipic acid (nylon 4:6), hexamethylene adipamide/caprolactam (nylon 6:6/6); hexamethylene adipamide/hexamethylene-isophthalimide (nylon 6:6/6ip); hexamethylene adipamide/hexamethylene-terephthalamide (nylon 6:6/6T); trimethylhexamethylene oxamide/hexamethylene oxamide (nylon trimethyl-6:2/6:2); hexamethylene adipamide/hexamethylene-azelaiamide (nylon 6:6/6:9); and hexamethylene adipamide/hexamethylene-azelaiamide caprolactam (nylon 6:6/6:9/6). Preferred polyamides comprise nylon 6, nylon 6:6, nylon 6:10 and mixtures thereof.

The polymer blend composition includes the polyamides in an amount sufficient to provide the composition with good chemical resistance and low load high temperature dimensional stability. Preferably, the polyamide is included in an amount of from about 20 to about 60 weight percent. In more preferred embodiments, the polyamide is included in an amount of from about 25 to about 55 weight percent.

The polymer blend compositions according to the present invention also include a styrenic component in an amount sufficient to provide the compositions with improved impact strength, improved resistance to water absorption, and reduced mold shrinkage. Preferably, the styrenic component is included in amount of

3

from about 30 to about 80 weight percent and, more preferably, in an amount of from about 40 to about 75 weight percent.

The styrenic component which is included in the polymer blend compositions according to the present invention preferably includes a styrenic polymer modified with a compatibilizing agent which improves the compatibilization of the styrenic polymer with the polyamide. Suitable styrenic polymers preferably include at least 25 percent substituted or unsubstituted styrene units. The compatibilizing agent provides the styrenic polymer with carboxylic acid-derived functional groups such as carboxylate, anhydride, carbonamide or the like functional groups or their amine derived functional groups, for example, acrylamide groups. The styrenic polymer included in the styrenic component of the blend compositions of the present invention may comprise one or more rigid styrenic polymers or one or more rubber modified styrenic polymers, modified with the compatibilizing agent as set forth above, or mixtures thereof. The styrenic component may also include rigid or rubber modified styrenic polymers which are not modified with a compatibilizing agent as set forth above, in addition to at least one rigid or rubber modified styrenic polymer which is modified with a compatibilizing agent as set forth above.

Rubber modified styrenic polymers which may be included in the polymer blend compositions according to the present invention comprise a styrene polymer and a rubbery polymer, for example, a rubbery polymer selected from the group consisting of polybutadiene, polyisoprene, rubbery styrene-diene copolymers, acrylic rubber and nitrile rubber. Specific examples of rubber modified styrene containing polymers comprise acrylonitrile-butadiene-styrene polymers (ABS), methylmethacrylate-butadiene-acrylonitrile-styrene polymers (MABS) and the like. Preferably, the rubber modified styrene containing polymer includes an acrylonitrile-butadiene-styrene polymer. As set forth above, in order to improve the compatibilization of the rubber modified styrene containing polymer such as ABS with the polyamide, it is preferred to modify the styrene containing polymer with a compatibilizing agent which provides the polymer with carboxylic acid-derived functional groups.

The styrenic polymer modified with a compatibilizing agent which is included in the styrenic component of the blend compositions of the present invention may be prepared in various manners. Three general methods are as follows. First, the compatibilizing agent may be added to a styrene monomer mixture. For example, a styrene monomer and, optionally, one or more other monomers, may be copolymerized with a monomer containing the carboxylic acid derived functional group, such as an acid, anhydride, amide or the like group, to provide a rigid styrenic polymer modified with the compatibilizing agent. Similarly, a styrene monomer and, optionally, one or more other monomers may be copolymerized with a monomer containing the carboxylic acid derived functional groups in the presence of a rubbery polymer in order to provide a rubber modified styrenic polymer modified with the compatibilizing agent. In a second embodiment, a styrene monomer and, optionally, one or more other monomers are copolymerized in the presence of a rubbery polymer. The resultant preformed rubber modified styrenic polymer is then reacted with a compound containing the carboxylic acid derived functional groups in order to provide a rubber modified styrenic polymer modified with a compatibilizing agent. In a third embodiment, a styrene monomer and, optionally, one or more other monomers could be copolymerized and the resulting preformed polymer could then be reacted with a compound containing the carboxylic acid derived functional groups. Other methods known in the art may also be used for preparing the styrenic component. The one or more other monomers may comprise any monomers suitable for copolymerizing with styrene, including, for example, acrylonitrile, methacrylonitrile, the lower alkyl esters of methacrylic acid, mixtures thereof and the like.

Finally, the polymer blend compositions according to the present invention also include a carboxylated polyolefin elastomer which is included in an amount sufficient to improve the impact and other mechanical properties of the polymer blend compositions. The carboxylated polyolefin elastomer is preferably included in an amount of from about 1 to about 25 weight percent, and more preferably, in an amount of from about 2 to about 15 weight percent. The carboxylated polyolefin elastomer provides the polymer blend compositions with surprising improvements in toughness, particularly at low temperatures. The improvements in toughness of the polymer blend compositions of the invention are surprising in view of the expected incompatibility of rubber modified styrene containing polymers, such as ABS, and olefinic elastomers.

The polyolefin included in the elastomer according to the present invention is preferably derived from alkylene monomers having 2 to 8 carbon atoms, such as ethylene, propylene, 1-butene, 1-pentene, 1-hexene, mixtures thereof and the like. The polyolefin may further include a diene such as 1,4-hexadiene or ethylidenenorbornene. Preferably the polyolefin comprises a copolymer of ethylene and another olefin compound, preferably propylene. The polyolefin is carboxylated, i.e., provided with carboxylic acid-derived functional groups such as carboxylate, anhydride, carbonomide and the like functional groups. The carboxylated polyolefin elastomer may be prepared by copolymerizing, for example, ethylene and another alkylene monomer in the presence of a compound containing the carboxylic acid-derived functional groups.

4

Alternatively, the polyolefin elastomer may be provided with the carboxylic acid-derived functional groups by a post-polymerization process.

Thus, the blend compositions according to the present invention include a polyamide, a styrenic component and a carboxylated polyolefin elastomer. The styrenic polymer includes at least one rigid or rubber modified styrenic polymer including carboxylic acid-derived functional groups, or mixtures thereof. The styrenic polymer may also include rigid or rubber modified styrenic polymers which do not include carboxylic acid-derived functional groups. Table 1 sets forth some of the blend compositions according to the present invention.

TABLE 1

| COMPONENTS OF BLEND COMPOSITIONS | | | | | | | | | | | |
|---|---|---|---|---|---|---|---|---|---|---|---|
| X = Required | | | | | | | | | | | |
| Component | | | | | | | | | | | |
| | A | B | C | D | E | F | G | H | I | J | K |
| Polyamide | X | X | X | X | X | X | X | X | X | X | X |
| Styrenic Component | | | | | | | | | | | |
| Carboxylated Styrenic (rigid) | X | X | X | X | X | X | | | | X | |
| Carboxylated Styrenic (rubbery) | | | | X | X | X | X | X | X | X | X |
| Styrenic (rigid) | | X | | | | X | | | X | | X |
| Styrenic (rubbery) | | | X | | | X | | | | X | X |
| | | | | | | X | | | | X | X |
| Elastomer | X | X | X | X | X | X | X | X | X | X | X |

The following examples demonstrate the polymer blend compositions according to the present invention and methods for preparing the same.

EXAMPLE 1

This example demonstrates the preparation of a polymer blend composition according to the present invention wherein the polyamide comprises polycaprolactam (nylon 6), the styrenic component comprises a mixture of ABS and a styrene-acrylonitrile copolymer having carboxylic acid-derived functional groups, and the carboxylated polyolefin elastomer comprises a maleated ethylene propylene copolymer rubber. Specifically, 50 parts by weight of a high molecular weight nylon 6 (supplied by NYCOA under the trade name Fosta® 578), 50 parts by weight of the styrenic component and 10 parts by weight EP-1 (an ethylene propylene copolymer rubber including 0.35 weight percent maleic anhydride and 45 weight percent ethylene and supplied by Exxon under the tradename Vistalon®) were used. The 50 parts by weight of the styrenic component included 17 parts by weight of a styrene-acrylonitrile-maleic anhydride polymer (SAMA), containing, in weight percentages, about 69 percent styrene, 29 percent acrylonitrile and 1 percent maleic anhydride, and 33 parts by weight of an ABS resin containing, in weight percentages, 15 percent acrylonitrile, 50 percent polybutadiene and 35 percent styrene. The nylon 6, SAMA and ABS polymers were compounded in a Werner Pfleiderer 57mm twin screw extruder. The resultant material was then recompounded with the EP-1 at 500° F (260° C) using a 28mm Werner Pfleiderer twin screw extruder. The resultant extrudate was ductile and exhibited good compatibility between the polymers. The Izod Impact strength of the final polymer blend composition was determined according to ASTM D256A using test specimens cut from injection molded ASTM tensile bars of 1/8 inch (3.2 mm) thickness. The polymer blend composition was also subjected to testing with the Dynatup® gravity driven instrumental impact system(1/2 inch (12.7 mm) diameter tup, 1.5 inch (38.1 mm) diameter ring base) using circular disks of 1/8 inch (3.2 mm) thickness. A general description of the Dynatup® equipment and procedure is set forth in ASTM D3763. The Dynatup® testing reflects the ductility of the polymer blend composition and the Dynatup® propagation energies ("prop.") generally correlate with ductility of failure. The results of the Izod Impact and Dynatup® testing are set forth in Table 2.

## EXAMPLE 2

A polymer blend composition as set forth in Example 1 was prepared except that only 5 parts by weight of the carboxylated polyolefin elastomer EP-1 was included in the composition. The resultant polymer blend composition was ductile and exhibited good compatibility between the polymers. The resultant material was subjected to the Izod Impact testing and Dynatup® testing as set forth in Example 1, the results of which are set forth in Table 2.

## EXAMPLE 3

A polymer blend composition was prepared as set forth in Example 1 except that 10 parts by weight of a carboxylated polyolefin elastomer EP-2 were substituted for the 10 parts by weight of the carboxylated polyolefin elastomer EP-1 of Example 1. The carboxylated polyolefin elastomer EP-2 comprises an ethylene propylene copolymer rubber including 0.84 weight percent maleic anhydride and 75 weight percent ethylene and was supplied by Exxon. The resultant polymer blend composition was ductile and exhibited good compatibility. The material was subjected to the Izod Impact and Dynatup® testing as set forth in Example 1, the results of which are set forth in Table 2.

## EXAMPLE 4

A polymer blend composition was prepared as set forth in Example 3 except that 5 parts by weight of the carboxylated polyolefin elastomer EP-2 was used instead of the 10 parts by weight as set forth in Example 3. The resultant polymer blend composition was ductile and exhibited good compatibility between the polymers. The material was subjected to the Izod Impact and Dynatup® testing as set forth in Example 1, the results of which are set forth in Table 2.

## EXAMPLE 5

A polymer blend composition was prepared as set forth in Example 1 except that 10 parts by weight of a carboxylated polyolefin elastomer EPDM-1 were substituted for the 10 parts by weight of the carboxylated polyolefin elastomer EP-1 of Example 1. The carboxylated polyolefin elastomer EPDM-1 comprises a polyolefin prepared from an ethylene-propylene diene monomer including 2.0 parts by weight maleic anhydride. The resultant polymer blend was ductile and exhibited good compatibility between the polymers. The material was subjected to the Izod Impact and Dynatup® testing as set forth in Example 1, the results of which are set forth in Table 2.

## EXAMPLE 6

A polymer blend composition was prepared as set forth in Example 5 except that only 5 parts by weight of the carboxylated polyolefin elastomer EPDM-1 were included. The resultant material was ductile and exhibited good compatibility between the polymers. The material was subjected to the Izod Impact and Dynatup® testing as set forth in Example 1, the results of which are set forth in Table 2.

## COMPARATIVE EXAMPLE 1

A polymer blend composition was prepared as set forth in Example 1 except that the carboxylated polyolefin elastomer was not included in the composition. The resulting material exhibited compatibility between the polymers. The material was subjected to the Izod Impact and Dynatup® testing as set forth in Example 1, the results of which are set forth in Table 2.

6

TABLE 2

| Example | 1 | 2 | 3 | 4 | 5 | 6 | CE 1 |
|---|---|---|---|---|---|---|---|
| Polyamide, parts by wt. (wt%) | 50 (45.5) | 50 (47.6) | 50 (45.5) | 50 (47.6) | 50 (45.5) | 50 (47.6) | 50 (50) |
| Styrenic Component, total parts by wt. (wt%) | 50 (45.5) | 50 (47.6) | 50 (45.5) | 50 (47.6) | 50 (45.5) | 50 (47.6) | 50 (50) |
| [parts ABS] [parts SAMA] | [33] [17] | [33] [17] | [33] [17] | [33] [17] | [33] [17] | [33] [17] | [33] [17] |
| Elastomer, parts by wt. (wt%) | 10 (9) | 5 (4.8) | 10 (9) | 5 (4.8) | 10 (9) | 5 (4.8) | -- -- |
| Izod Impact, ASTM D256A | | | | | | | |
| Ft.Lbs./In., 14° F-10# Hammer (-10°C) | 13.3 | 12.3 | 12.3 | 11.7 | 12.6 | 11.8 | 2.3 |
| Dynatup® Ft.Lbs. | | | | | | | |
| -20°F(-28.89°C) | | | | | | | |
| Init. | 19.2 | 21.2 | 19.9 | 21.2 | 20.3 | 20.4 | 21.5 |
| Prop. | 13.0 | 14.9 | 14.5 | 14.7 | 12.4 | 11.6 | 6.5 |
| Total | 32.2 | 36.1 | 34.4 | 35.9 | 32.7 | 32.0 | 27.6 |
| Ductile/Brittle | 5/0 | 4/0 | 5/0 | 5/0 | 5/0 | 3/2 | 1/4 |
| -40°F (-40°C) | | | | | | | |
| Init. | 23.2 | 25.0 | 23.0 | 25.1 | 23.4 | -- | 20.7 |
| Prop. | 9.7 | 15.7 | 14.9 | 10.1 | 10.0 | -- | 0.56 |
| Total | 32.9 | 40.7 | 37.9 | 35.2 | 33.4 | -- | 21.3 |
| Ductile/Brittle | 5/0 | 3/1 | 5/2 | 5/0 | 5/0 | -- | 0/5 |

As may be observed from Table 2, the Izod Impact strengths of the compositions according to the present invention are significantly improved over that of Comparative Example 1. The polymer blend compositions of Examples 1-6 according to the invention exhibit superior impact strength and ductility at the low temperatures indicated as compared with the composition of Comparative Example 1.

EXAMPLE 7

A polymer blend composition according to the present invention was prepared by mixing 50 parts by weight of a polyamide comprising nylon 6 (Fosta® 578 supplied by NYCOA), 40 parts by weight of a modified ABS polymer and 10 parts by weight of a carboxylated polyolefin elastomer EP-3. The modified ABS polymer comprised an acrylonitrile-styrene-acrylamide-butadiene graft copolymer, wherein the acrylamide comprises the carboxylic acid derived functional groups. The carboxylated polyolefin elastomer EP-3 comprises a maleated ethylene propylene copolymer rubber including 77 weight percent ethylene and 0.77 weight percent maleic anhydride, having a Mooney viscosity of 33 and supplied by Exxon. 0.5 parts by weight of a lubricant comprising an ethylene oxide-propylene oxide copolymer supplied under the tradename Pluronic® F-88 by BASF Wyandotte Chemical Company, were also added. The mixture was compounded using a Werner Pfleiderer co-rotating twin screw extruder at a temperature of about 500°F (260°C). The resulting extrudate was smooth and ductile and exhibited good compatibility between the polymers. The material was subjected to the Izod Impact testing as set forth in Example 1, the results of which are set forth in Table 3.

## EXAMPLE 8

A polymer blend composition was prepared by compounding approximately 100 parts by weight of nylon 6 (Fosta® 578 supplied by NYCOA) with 10 parts by weight of the carboxylated polyolefin elastomer EP-3 disclosed in Example 7. When subjected to the Izod Impact testing set forth in Example 1, the resulting blend exhibited an impact strength of 5.4 ft.lb./in. 55 parts by weight of the nylon 6/EP-3 blend were compounded with 45 parts by weight of the ABS polymer set forth in Example 7 and 0.5 parts by weight Pluronic® F-88 using a Werner Pfleiderer co-rotating twin screw extruder at a temperature of about 500° F (260° C). The resulting material was subjected to the Izod Impact test, the results of which are set forth in Table 3.

## EXAMPLE 9

A polymer blend composition according to the present invention was prepared by compounding approximately 100 parts by weight of a medium molecular weight nylon 6 polyamide (supplied from Nylon Polymers of America under the name X492) with approximately 20 parts by weight of the carboxylated polyolefin elastomer EP-3. The resulting blend was subjected to Izod Impact testing and exhibited a strength of 6.3 ft.lb./in. 60 parts by weight of the resultant blend were compounded with 40 parts by weight of the ABS polymer set forth in Example 7 and 0.5 parts by weight Pluronic® F-88 and extruded in the manner set forth in Example 7. The resultant extrudate was smooth and ductile and exhibited good compatibility between the polymers. The material was subjected to Izod Impact testing, the results of which are set forth in Table 3.

## COMPARATIVE EXAMPLE 2

A polymer blend composition was prepared as set forth in Example 7 except that 50 parts by weight of the ABS polymer were used and the carboxylated polyolefin elastomer was not included. The resultant polymer blend composition exhibited compatibility between the polymers and was subjected to the Izod Impact testing as set forth in Example 7, the results of which are set forth in Table 3.

TABLE 3

| Example | 7 | 8 | 9 | CE 2 |
|---|---|---|---|---|
| Polyamide, wt% | 50 | 49.5 | 48 | 50 |
| Styrene Polymer wt% | 40 | 45 | 40 | 50 |
| Elastomer, wt% | 10 | 5.5 | 12 | -- |
| Izod Impact, Ft.Lbs./In. -10# Hammer ASTM D256A | | | | |
| 23° C | 15.4 | 15.9 | 13.5 | 13.3 |
| -10° C | 14.6 | 3.4 | 12.5 | 1 |

Examples 7-9 also demonstrate that the blend compositions of the invention provide a significant enhancement of impact strength when the styrenic component is added to the preformed polyamide-carboxylated elastomer blend.

## EXAMPLES 10-16

Polymer blend compositions according to the present invention were prepared using the ABS polymer set forth in Example 7, nylon 6 and a carboxylated ethylene propylene copolymer rubber in the manner set forth in Example 7. The compositions of Examples 10-16 are set forth in Table 4. The carboxylated ethylene propylene copolymer rubbers used in these Examples are selected from EP-3 (described in Example 7), EP-4 (containing 77 weight percent ethylene and 0.51 weight percent maleic anhydride and having a Mooney viscosity of 33), EP-5 (containing 77 weight percent ethylene and 0.21 weight percent maleic anhydride and having a Mooney viscosity of 44), EP-6 (containing 49 weight percent ethylene and 0.51 weight percent maleic anhydride and having a Mooney viscosity of 20), and EP-7 (containing 45 weight percent ethylene and 0.35 weight percent maleic anhydride and having a Mooney viscosity of 20), all supplied by Exxon. The resulting materials were subjected to Izod Impact, Dynatup® (gravity driven instrumented impact system, 1/2" (12.7 mm) diameter tup, 1 1/2" (38.100 mm) diameter ring base) and cantilever beam testing (injection molded sample, 1/8" x 1/2" x 6" overhang (i.e. 3.2X12.7x152.4 mm), the results of which are set forth in Table 4. The materials were also subjected to testing according to ASTM 648 using 1/8" (3.2 mm) injection molded unannealed specimens, the results of which are also set forth in Table 4.

COMPARATIVE EXAMPLES 3 & 4

Polymer blend compositions were prepared as set forth in Examples 10-16 except that a carboxylated polyolefin elastomer was not included in the compositions. The compositions of Comparative Examples 3 and 4 are set forth in Table 4. The resultant materials were subjected to the same testing as the materials in Examples 10-16, the results of which are also set forth in Table 4.

TABLE 4

| Example | 10 | 11 | 12 | 13 | 14 | 15 | 16 | CE 3 | CE 4 |
|---|---|---|---|---|---|---|---|---|---|
| Polyamide, wt% (Fosta® 578) | -- | -- | -- | -- | -- | 50 | 50 | 50 | -- |
| Polyamide, wt% (X429) | 50 | 50 | 50 | 50 | 50 | -- | -- | -- | 50 |
| Styrenic Component, wt% | 45 | 45 | 45 | 45 | 45 | 45 | 45 | 50 | 50 |
| Elastomer, wt% | | | | | | | | | |
| EP-3 | 5 | -- | -- | -- | -- | 5 | -- | -- | -- |
| EP-4 | -- | 5 | -- | -- | -- | -- | -- | -- | -- |
| EP-5 | -- | -- | 5 | -- | -- | -- | -- | -- | -- |
| EP-6 | -- | -- | -- | 5 | -- | -- | 5 | -- | -- |
| EP-7 | -- | -- | -- | -- | 5 | -- | -- | -- | -- |
| Izod Impact, Ft.Lbs./In. 23°C-10# Hammer ASTM A256A | 15.8 | 17.5 | 17.2 | 16.7 | 16.1 | 16.7 | 16.4 | 14.8 | 15 |

TABLE 4 (cont.)

| Example | 10 | 11 | 12 | 13 | 4 | 15 | 16 | CE 3 | CE 4 |
|---|---|---|---|---|---|---|---|---|---|
| Dynatup®, Ft.Lbs.-ASTM 3763 | | | | | | | | | |
| -30˚ C | | | | | | | | | |
| Init. | 23.8 | 24.9 | 25 | 24.6 | 24.6 | 21.5 | 25.4 | 18.4 | 25.9 |
| Prop. | 13.7 | 13.9 | 15 | 18.1 | 19.7 | 12.1 | 17.2 | 5 | 11.2 |
| Total | 37.6 | 38.8 | 39.9 | 42.8 | 44.3 | 33.7 | 42.6 | 23.5 | 37 |
| Ductile/Brittle | 3/2 | 5/0 | 5/0 | 5/0 | 5/0 | 3/2 | 5/0 | 0/5 | 2/3 |
| -40˚ C | | | | | | | | | |
| Init. | -- | 20.4 | 22.2 | 20.9 | 23.9 | -- | 24.3 | -- | -- |
| Prop. | -- | 13 | 13.6 | 12.4 | 16.5 | -- | 17.5 | -- | -- |
| Total | -- | 33.4 | 35.9 | 33.4 | 40.4 | -- | 41.9 | -- | -- |
| Ductile/Brittle | -- | 4/1 | 4/1 | 4/1 | 5/0 | -- | 5/0 | -- | -- |
| Cantilever Beam Sag, 1 hr. 275˚ F (in.) (135˚ C) | 0.69 | 0.56 | 0.75 | 0.59 | 0.75 | 0.53 | 0.63 | 1.06 | 0.63 |
| 264 PSI HDT-ASTM 684 1/8" IM (3.2 mm) unannealed | 151 | 147 | 149 | 143 | 151 | 156 | 150 | 167 | 154 |

The results set forth in Tables 3 and 4 demonstrate that while the impact resistance of the polymer blend compositions of Comparative Examples 2-4 are respectable, the impact resistance and the ductility at low temperatures of the polymer blend compositions according to the present invention including the polyamide, the styrenic component and the carboxylated polyolefin elastomer are significantly improved as compared with those of the Comparative Examples. Only a small loss in heat distortion properties under high loads is observed with the compositions according to the present invention as compared with those of the prior art. Similarly, only a small change is observed in the warp resistance under low loads at elevated temperatures as measured by the cantilever beam test for the compositions according to the present invention as compared with those of the Comparative Examples. The results in Tables 3 and 4 also demonstrate that the blend compositions of the invention provide a significant enhancement of impact strength when the styrene component is added to the preformed polyamide-carboxylated elastomer blend. Thus, the compositions according to the present invention provide improved impact strengths and ductility, particularly at low temperatures, without sacrificing other important properties of the polymer blends.

While the Examples demonstrate blending of the polymer materials using extrusion processes, other methods known in the art may be employed.

The preceding Examples are set forth to illustrate specific embodiments of the invention and are not intended to limit the scope of the compositions of the present invention. Additional embodiments and advantages within the scope of the claimed invention will be apparent to one of ordinary skill in the art.

## Claims

1. A polymer blend composition, comprising:
   (a) from about 20 to 60 weight percent polyamide;
   (b) from about 30 to 80 weight percent of a styrenic component including carboxylic acid derived functional groups; and
   (c) from about 1 to 25 weight percent of a carboxylated polyolefin elastomer.
2. A polymer blend composition as defined by claim 1, comprising
   (a) from about 25 to 55 weight percent polyamide;
   (b) from about 40 to 75 weight percent of the styrenic component; and
   (c) from about 2 to 15 weight percent of the carboxylated polyolefin elastomer.
3. A polymer blend composition as defined by claim 1, wherein the styrenic component comprises a styrene containing polymer including carboxylic acid derived functional groups.

4. A polymer blend composition as defined by claim 3, wherein the styrene containing polymer comprises a rubber modified styrene containing polymer.

5. A polymer blend composition as defined by claim 4, wherein the rubber modified styrene containing polymer includes an acrylonitrile-butadiene-styrene polymer including carboxylic acid derived functional groups.

6. A polymer blend composition as defined by claim 3, wherein the styrene containing polymer comprises a styrene-acrylonitrile polymer having carboxylic acid-derived functional groups.

7. A polymer blend composition as defined by claim 3, wherein the styrenic component includes a second styrene containing polymer.

8. A polymer blend composition as defined by claim 7, wherein the styrene containing polymer including carboxylic acid derived functional groups comprises a styrene-acrylonitrile polymer having carboxylic acid-derived functional groups and the second styrene containing polymer is rubber modified.

9. A polymer blend composition as defined by claim 8, wherein the second styrene containing polymer comprises acrylonitrile-butadiene-styrene polymer.

10. A polymer blend composition as defined by claim 1, wherein the carboxylated polyolefin elastomer comprises a copolymer of ethylene and another olefin compound.

11. A polymer blend composition as defined by claim 6, wherein the carboxylated polyolefin elastomer comprises an ethylene-propylene copolymer.

12. A polymer blend composition as defined by claim 7, wherein the carboxylated polyolefin elastomer comprises a maleated ethylene-propylene copolymer.

13. A polymer blend composition as defined by claim 1, wherein the polyamide is selected from the group consisting of nylon 6, nylon 6:6, nylon 6:10 and mixtures thereof.

14. A polymer blend composition as defined by claim 1, wherein the polyamide comprises nylon 6.